# EUROPEAN PATENT APPLICATION

(11) **EP 3 210 897 A1**
(43) Date of publication of application: **30.08.2017**
(21) Application number: 16156818.3
(22) Date of filing: 23.02.2016
(51) Int. Cl.: B65B 55/00, A23L 3/3418, F25D 17/06, B65D 88/74

(54) **STORAGE ASSEMBLY AND ASSOCIATED METHOD**

(71) Applicant: Aqua Victoria AS, 3420 Lierskogen (NO)
(72) Inventor: JENSEN, Terje, 1397 Nesøya (NO)
(74) Representative: Protector IP Consultants AS

(57) **Abstract**

A storage assembly (10) comprising a storage chamber (3), a pressure device (9) in communication with the storage chamber (3), and a pressure device control unit (19) controlling the pressure device (9). The pressure device control unit (19) is configured to control the pressure device (9) to sequentially amend the pressure within the storage chamber (3) according to a reciprocating pressure pattern (29). An associated method is also disclosed.

## Description

The present invention relates to a storage assembly configured to control, and a method of controlling, climate conditions inside permeable packing. In particular, controlled climate conditions can involve e.g. temperature and gas composition within such permeable packing. The invention also relates to an associated method.

### Background

Storage assemblies are essential for transportation of many types of goods. Such types are typical goods that should be stored within a certain temperature range, or with a certain gas composition. One example is the storage of fruits and vegetables, stored in cardboard packing. The climate within the packing will affect the quality of the fruits and vegetables after storage. Consequently, one seeks to control the climate within the packing. Other goods affected by climate within the packing includes, inter alia, flowers and other plants, dairy products, meats, and other cooled or even frozen goods. One can also imagine goods which must be kept above a certain temperature, for instance flowers.

During transportation, goods are often repacked and/or transferred from one storage assembly to another, which results in changes in temperature. In such situations, it may be desirable to be able cool (or heat, or otherwise amend the climate) goods fast and effectively. A typical scenario may be when transferring dairy products from a factory to a refrigerated transport vehicle on a warm summer day.

When goods are packed in air-filled packing, such as boxes or containers, cooling or re-cooling the goods may take significant time. This is especially the case when many boxes are grouped together, such as on a pallet or the like. The boxes have an insulating effect by reducing circulation of air and preventing cold air from reaching the goods.

Moreover, when a packing containing goods is placed inside e.g. a refrigerated chamber, there will be substantially no or at least only a small flow of cold air flowing from the cooled space outside the packing to the inside of the packing. In other words, the packing keeps the refrigerated air from reaching the goods inside the packing. Consequently, for adjusting the temperature within the packing, one must rely much on convection. Indeed, to encourage the exchange of air through the packing walls, it is known to arrange vents in the packing. Still however, not much air will flow through such vents. This is particularly true when stacking a plurality of packings together in a compact fashion.

It is well known in the art of preserving plant materials, such as fruits and flowers, to lower the air pressure and the temperature of the storage space, as well as adapting the humidity, hence adapting the gas mixture of the storage chamber. For instance, patent publication GB1426917 discloses a variety of combinations of reduced pressures, temperatures and humidity for a variety of goods, such as apples, cut flowers, and tomatoes.

Hence, for long term storage, a reduced pressure is used for many goods. However, a low air / gas pressure reduces the convection, and may increase the time for cooling the goods inside packings.

It is an object of the invention to provide a storage assembly and an associated method, with which one can quickly adapt the climate inside packings. As discussed above, such climate can relate to parameters as temperature and gas composition within the packings.

Some goods, such as fruits, produce gases during storage, which affect the quality of the goods. A well-known example is fruit that produces ethylene gas. The ethylene gas accelerates ripening of the fruits. Consequently, it is often a desire to remove the ethylene gas from the space within the packing, in order to avoid the said acceleration of ripening. Such gas removal, be it ethylene or another gas, is another object of the present invention.

Some goods even produce heat during storage. Thus, even if the temperature within a packing that contains goods has been equalized to the same temperature as in the storage chamber in which the packing is stored, the temperature within the packing may rise. Such temperature rise may be the result of decay of plant material (e.g. fruits and vegetables), a process which produces heat.

### The invention

According to a first aspect of the invention, there is provided a storage assembly comprising a storage chamber, a pressure device in communication with the storage chamber, and a pressure device control unit controlling the pressure device. The pressure device control unit is configured to control the pressure device to sequentially amend the pressure within the storage chamber according to a reciprocating pressure pattern.

When storing permeable packings in the storage chamber, such reciprocation of the pressure will make some of the air or gas in the storage chamber enter and leave the packing space inside the packings. In that way, the climate within the packing space (i.e. space inside the packing, such as inside a cardboard box) will be adjusted to the climate in the storage chamber. That is, for each pressure variation, be it a pressure rise or a pressure drop, some air (or gas) will flow into or out of the packing.

Advantageously, the pressure device control unit is configured to control the pressure device in the said manner, within a predetermined frequency range. Such a frequency range will depend on the goods in the packings that are stored in the storage chamber. For example, if small packings with a high degree of permeability are used, the frequency with which the pressure is reciprocated, can be relatively large. This may for instance be the case with boxes that are perforated in order to vent the inside of the boxes. On the other hand, if large packings are used, which have a low degree of permeability, the pressure should be reciprocated with a lower frequency. In this manner, one will give the needed time for gas to flow into and out of the packings, typically through small openings in the packings. One should also consider the character of the packings or the goods inside them, when choosing a suitable frequency or frequency range. For instance, a fragile packing with low permeability, may be destroyed by a rapid pressure variation (pressure rise or pressure fall), since an excessive pressure drop and consequently an excessive, detrimental force may arise on the walls of the packing. For some types of goods, one may also have to consider their tolerance to pressure variations. For instance, a rapid pressure drop in the ambience of a paprika, may result in the paprika cracking open, since the paprika itself is filled with air / gas.

With the term reciprocating pressure pattern, is meant a pressure which is succeedingly rising and sinking. As used in the context of the present invention, the reciprocating pressure pattern within the storage chamber, is a pressure inside the storage chamber which is made to fluctuate up and down. In mathematical terms, the derivative of the pressure value in the time domain will repeatedly change between positive and negative values. Indeed, the derivative may also remain zero for some periods (constant pressure).

The storage chamber will have a closable door, hatch or other closable member, making it possible to transport goods into and out of the storage chamber when the door is open. As will be understood by the skilled person, the storage chamber should advantageously be substantially air tight in order to obtain the reciprocating pressure pattern. Hence, the door should be closed when reciprocating the pressure in the storage chamber.

While the pressure device control unit is configured to control the operation of the pressure device, it should be clear that other control units may control components which also may affect the pressure in the storage chamber. For instance, a valve can be controlled by a valve control unit, wherein the valve is used for increasing or decreasing the pressure, by letting gas (e.g. air) into or out of the storage chamber. Hence, the resulting reciprocating pressure pattern in the storage chamber, can also be affected by operation of other units, in co-operation with the pressure device control unit. Alternatively, the pressure device control unit may control the pressure device as well as other components that affect the pressure.

In some embodiments, the pressure device may be configured to reduce pressure in the storage chamber. In other embodiments, the pressure device may be configured to increase the pressure. The pressure device may also be configured to both reduce and increase the storage chamber pressure. Alternatively, one may have two pressure devices, wherein one is configured to increase pressure, while the other is configured to reduce pressure.

The pressure device control unit can comprise or connect to electronically stored or electronically readable pressure control instructions, according to which the pressure device control unit is configured to operate the pressure device.

The reciprocating pressure pattern can include at least five succeeding steps of pressure reductions and pressure augmentations. In some embodiments, one will commence with a pressure reduction, followed by pressure rise, and repeat this several times. In other embodiments, one may commence with a pressure augmentation, followed by a pressure drop.

The pressure device control unit can be configured to control the pressure device in such manner that the reciprocating pressure pattern is within a predetermined frequency range of 0,0006 Hz to 10 Hz.

This frequency range corresponds to a cycle time ranging from 0,1 seconds to about 28 minutes. Other embodiments can however include other frequency ranges, including both higher and lower frequencies than indicated in the frequency range above.

Moreover, some reciprocating pressure patterns may have periods with substantially constant pressure, interposed between pressure variations.

In some embodiments, the storage assembly according to the invention can be installed on a transport vehicle. Typically, such a storage assembly can be installed on a trailer, such as a refrigerated trailer / truck. It may also be retrofitted to existing vehicles or transport containers, typical cooled containers.

The pressure control instructions can include a start-up phase and a storage phase, wherein the start-up phase includes larger pressure variations and/or higher frequency of the pressure variations, than the storage phase does. A pressure variation is defined as the pressure difference between the pressure value at the start and the pressure value at the end of a pressure rise or pressure drop.

The storage assembly can comprise a storage chamber condition manipulation means, including at least one of a temperature device and a gas composition device. A temperature device can typically be a cooling device, configured to maintain a relatively (compared to the climate outside of the storage chamber) cold temperature in the storage chamber. It may however also be a heating device, configured to maintain a relatively warm temperature in the storage chamber.

A gas composition device can typically be a device configured to adjust the composition of gases in the storage chamber. The gas composition device may for instance be an air humidity device, which can be controlled to adjust the humidity inside the storage chamber (i.e. humidity of the air inside the storage chamber). The gas composition device can however also be of a type configured to add and/or to remove other specific gases or specific types of gases.

In embodiments without a temperature device or a gas composition device, the storage assembly may still be used to evacuate certain undesirable gases from the inside of packings, such as cardboard boxes. Such an undesirable gas can for instance be ethylene produced by fruits stored in cardboard boxes. However, with a storage chamber condition manipulation means, one may increase control of the storage chamber climate, and consequently the climate within the packings.

In some embodiments, one may want to increase the ripening of for instance fruits within the permeable packings. Then, one may add ethylene gas into the storage chamber. By means of the storage assembly according to the invention, one may ensure that a desired amount or cut of ethylene is present within the permeable packings.

The storage assembly according to the invention may include an evacuated gas storage. The pressure device can then, in some embodiments, be arranged in a flow path between the storage chamber and the evacuated gas storage. A re-entry flow path can exist between the evacuated gas storage and the storage chamber.

In some embodiments, the flow path between the storage chamber and the evacuated gas storage is the same as the re-entry flow path.

According to a second aspect of the present invention, there is provided a method of adjusting the climate of a packing space inside permeable packing which is stored in a storage chamber. The method includes the steps of
a) closing a closable door of the storage chamber; and
b) while the closable door remains closed, sequentially amending the pressure within the storage chamber according to a reciprocating pressure pattern.

Advantageously, the pressure is reciprocated within a predetermined frequency range. As discussed above, the frequency of the pressure fluctuations should be adapted to the packings and goods stored in the storage chamber.

In an embodiment of the second aspect of the invention, step b) comprises at least five succeeding steps of pressure reductions and pressure augmentations. In other words, step b) can include at least five pressure fluctuations.

Step b) can also be performed, at least partly, by means of a pressure device communicating with the storage chamber. Step b) can then include controlling the pressure device with a pressure device control unit, which operates according to a set of predetermined, stored pressure control instructions.

Here, the term "at least partly" shall mean that also other components also may be used for amending the pressure. An example of such another component is a valve, which may be opened, thereby letting air or gas flow into or out of the storage chamber (and then the valve can be closed).

In some embodiments, the storage chamber can be carried by a wheeled vehicle, wherein step b) is performed while the vehicle is moving. In other embodiments, the storage chamber may be on another transport means, such as a ship.

In some embodiments, the storage chamber will be inside a refrigerated container. A refrigerated container is to be understood as any type of arrangement for storing and refrigerating goods, such as a refrigerated transportation container or reefer, a cold storage, a refrigerated space or the like.

Many embodiments of the invention is particularly, but not exclusively, advantageous for cooling goods in packing, such as goods inside card board boxes or other containers.

### Example of embodiment

The storage assembly and the method according to the invention will now be described in more detail with regard to the accompanying figures. The figures show examples implementing the present invention and is not to be construed as being limiting to other possible embodiments falling within the scope of the attached claim set.
- Fig. 1: is a schematic view of a commodity stored inside a box, wherein the box is stored inside a pressure-controlled storage chamber;
- Fig. 2: are curves showing experimental results, which illustrate the effect of the present invention;
- Fig. 3: is a schematic illustration of an embodiment of the invention;
- Fig. 4: is a schematic illustration of a reciprocating pressure pattern within the storage chamber shown in Fig. 1;
- Fig. 5: is a schematic illustration of another reciprocating pressure pattern;
- Fig. 6: is yet a schematic illustration of a reciprocating pressure pattern;
- Fig. 7a and Fig. 7b: are top views of two alternative embodiments of the assembly according to the invention;
- Fig. 8: illustrates a possible embodiment of the pressure device;
- Fig. 9: illustrates another possible embodiment of the pressure device; and
- Fig. 10: schematically illustrates another embodiment of the invention.

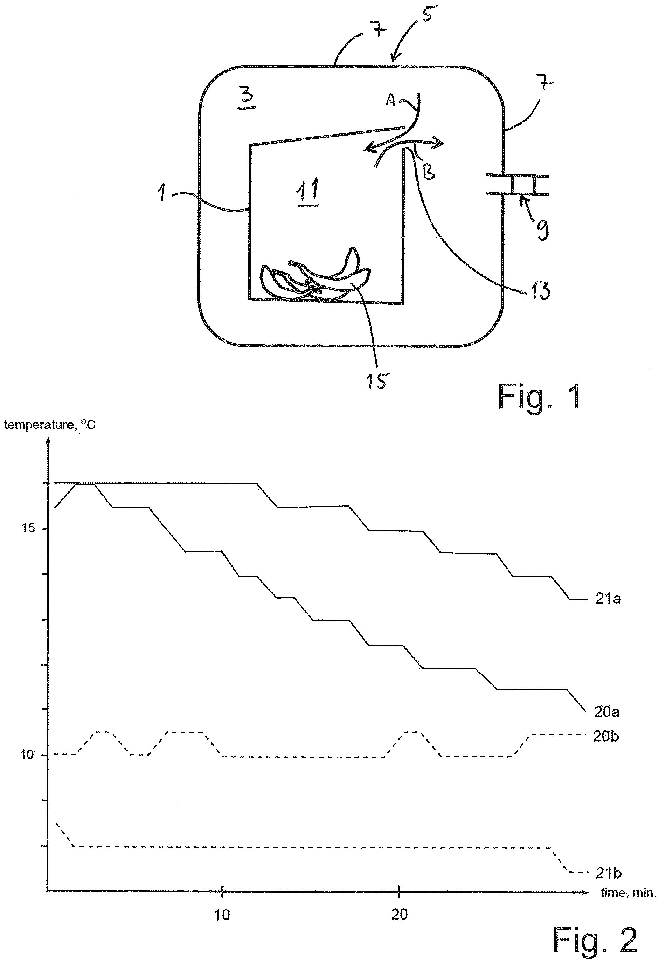

Fig. 1 is a schematic illustration for the purpose of explaining the function of the invention. A permeable packing, such as a cardboard box 1, is stored inside a storage chamber 3. The storage chamber 3 is a substantially airtight container 5 having container walls 7. The container 5 is also provided with a door (not shown in Fig. 1), so that one can move items, such as the cardboard box 1, into and out of the storage chamber 3.

In one container wall 7, there is provided a pressure device 9. The pressure device 9 is configured to alter the internal pressure in the storage chamber 3. I.e. it can lower and raise the internal pressure.

Inside the packing, here in the form of the cardboard box 1, there is a packing space 11. A box opening 13 is shown in Fig. 1, to illustrate the permeability of the cardboard box 1. Moreover, the goods 15 stored inside the packing space 11 of the cardboard box 1 are fruits, here represented by bananas.

To illustrate the function of the present invention, it is assumed that the cardboard box 1, as well as the goods 15 (bananas) are relatively warm, for instance a temperature of 25 °C. It is further assumed that the temperature inside the storage chamber 3 is colder, e.g. 10 °C, and that the goods 15 shall be cooled down to the temperature inside the storage chamber.

By amending the pressure within the storage chamber 3 repeatedly according to a reciprocating pressure pattern, air will flow into and out of the cardboard box 1 through the box opening 13. In particular, when reducing the pressure in the storage chamber 3, air will flow out of the packing space 11 within the cardboard box 1, through the box opening 13, as illustrated with the arrow B. Then, when thereafter increasing the pressure within the storage chamber 3, (cold) air will flow into the packing space 11 through the box opening 13, as illustrated with the arrow A. As now will be appreciated by the person skilled in the art, by repeating the reductions and augmentations of the storage chamber pressure, one will replace a significant portion of the air inside the packing space 11 with air outside the cardboard box 1. Hence, a rapid cooling of the goods 15 inside the packing / cardboard box 1 is achieved.

It is noted that in a more realistic example, the permeability of the packing 1 may not be in the form of a defined opening 13 as illustrated in Fig. 1. Rather, some packings 1 may be provided with perforations in the packing walls. Other packings 1 may be more closed, but still not be completely air tight and still permeable. Yet other packings 1 may have significantly other shapes, for instance in the form of permeable and flexible bags.

Having explained the basic function of the invention with reference to Fig. 1, reference is now made to the diagram of Fig. 2. Fig. 2 depicts experimental results from a refrigeration process with and without the use of the present invention. The results show that the invention is effective for cooling goods arranged in permeable packing.

In Fig. 2, the second upper most temperature curve 20a shows the development in temperature inside a packing 1 being refrigerated using the storage assembly and method according to the invention. The dotted line temperature curve 20b shows the temperature inside the storage chamber 3 of the same storage assembly.

Correspondingly, the top temperature curve 21 a shows the development in temperature inside a packing or box being refrigerated using a conventional storage assembly. The bottom dotted line temperature curve 21 b shows the development in the ambient temperature inside the storage space of the conventional storage assembly. In the conventional assembly, the air pressure within the storage chamber remained constant.

As is evident from Fig. 2, the temperature 20a approaches the storage chamber temperature 20b significantly faster that the temperature 21 a approaches the storage chamber temperature 21 b of the conventional assembly. Within approximately 30 minutes the temperature inside a packing 1 refrigerated using the inventive storage assembly and method reaches the approximate temperature of the storage chamber 3. In contrast, using a traditional storage assembly and method, the difference between packing temperature 21 a and storage chamber temperature 21 b is still significant after 30 minutes of cooling. The refrigeration method and assembly according to the invention is thus effective for cooling goods arranged in permeable packing.

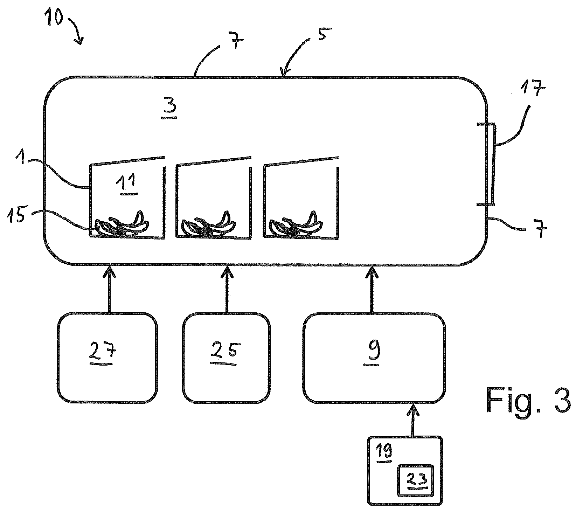

Fig. 3 is a schematic illustration of a storage assembly 10 according to the invention. The container 5 has a closable door 17 through which packings 1 with goods 15 can be transported into and out of the storage chamber 3. The pressure device 9 is an arrangement which can be controlled to lower and raise the air (gas) pressure within the container 5, i.e. within the storage chamber 3. A pressure device control unit 19 connects to or is integrated with the pressure device 9. The pressure device control unit 19 is adapted to control the function of the pressure device 9. I.e. the control unit 19 can actuate the pressure device in such manner that the pressure device 9 raises the pressure and/or lowers the pressure in the storage chamber 3.

In some embodiments, the pressure device 9 can be configured to merely evacuate the storage chamber 3, thereby lowering its pressure, without being able to elevate the pressure. In such embodiments, one may arrange a valve which can let air back into the storage chamber 3 when the pressure shall rise. Such a valve (not shown) can also advantageously be controlled by the pressure device control unit 19, or alternatively by a separate valve control unit (not shown). In other embodiments, the pressure device 9 can be configured to augment the pressure in the storage chamber 3, without being able to lower the pressure. Also in such embodiments, a valve can be operated, however in order to reduce the pressure. Preferably though, the pressure device 9 can be configured both to reduce and to elevate the storage chamber pressure.

In the embodiment shown in Fig. 3, but also possible in other embodiments of the present invention, the pressure device control unit 19 comprises pressure control instructions 23. The pressure control instructions 23 are in this embodiment a set of computer readable instructions which governs the output of the pressure control unit 19, and hence the operation of the pressure device 9.

Advantageously the pressure control instructions 23 can be a computer program, readable by a computer such as a PLC (programmable logic controller). It may also be stored as an electric circuit. Moreover, the pressure control instructions 23 can, instead of being stored in the pressure device control unit 19 itself, be stored elsewhere, however with connection to the pressure device control unit 19.

In the embodiment schematically shown in Fig. 3, the storage assembly 10 also comprises a temperature device 25. The temperature device 25 is configured to maintain a predetermined temperature within the storage chamber 3. In many embodiments, the temperature device 25 will be in the form of a refrigeration unit, adapted to maintain a relatively cold temperature in the storage chamber 3, compared to the temperature outside the container 5. The function and constructive elements of the temperature device 25 will not be described in detail herein, since refrigeration units as well as heating devices are assumed to be well known to the person skilled in the art.

The storage assembly 10 depicted in Fig. 3 further comprises a gas composition device 27. As discussed above, for some goods, such as fruits and vegetables, the gas mixture surrounding the goods will affect the goods. The gas composition device 27 is adapted for adjusting the composition of gases in the storage chamber. For instance, the gas composition device can be used for introducing a mixture of oxygen, nitrogen and or carbon dioxide into the storage chamber 3. The mixture of gasses may be adjusted according to the type of goods stored. Some goods may benefit from air inside the storage space with a high or lower content of a specific type of gas.

The gas composition device 27 can also be configured to adjust the humidity inside the storage chamber 3.

When augmenting the pressure inside the container 5, temperature controlled air, e.g. cooled air, from the temperature device 25 may be introduced into the storage chamber 3 to increase the pressure. Alternatively or additionally, a gas composition controlled air composition, for instance containing a mixture of oxygen, nitrogen and/or carbon dioxide may be introduced into the storage chamber 3, by the gas composition device 27. Air (gas) removed from the storage chamber 3 during evacuation may also be cleaned and re-introduced into the storage space to increase the pressure.

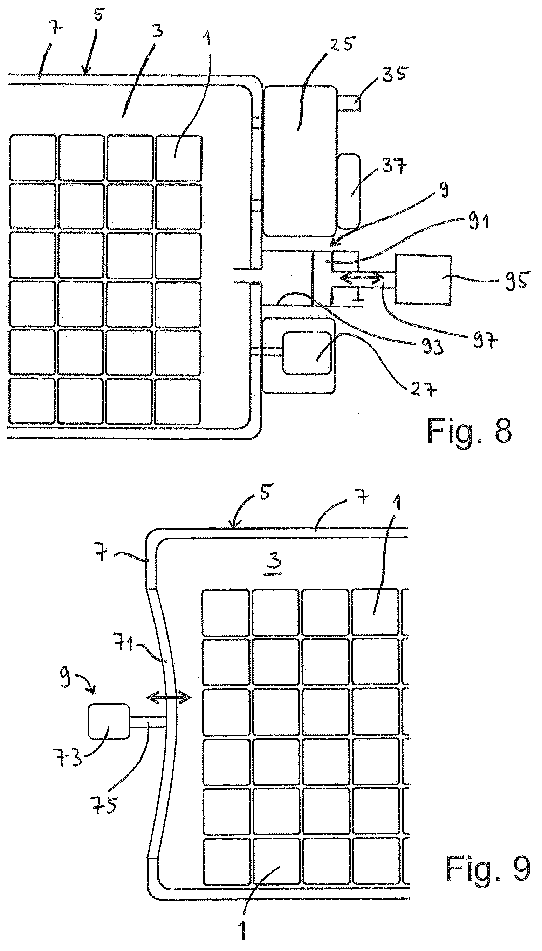

In some embodiments, pressure variations within the storage chamber 3 can be accomplished by amending the volume of the storage chamber 3 (cf. e.g. Fig. 8 and Fig. 9).

When amending the pressure within the storage chamber according to the reciprocating pressure value pattern, ethylene or other undesirable gasses present in the packing space 11 (inside the packings 1), will be replaced with the gas composition outside the packings 1. That is, a total replacement will not take place, however some of the undesirable gasses will flow out of the packings 1 when reducing the pressure, while air / gas having a more desirable gas composition, will flow back into the packings 1 when augmenting the storage chamber pressure. Moreover, if there is a difference in gas compositions inside and outside the packings 1, such difference will be reduced a bit for each repetition of pressure rise and pressure reduction.

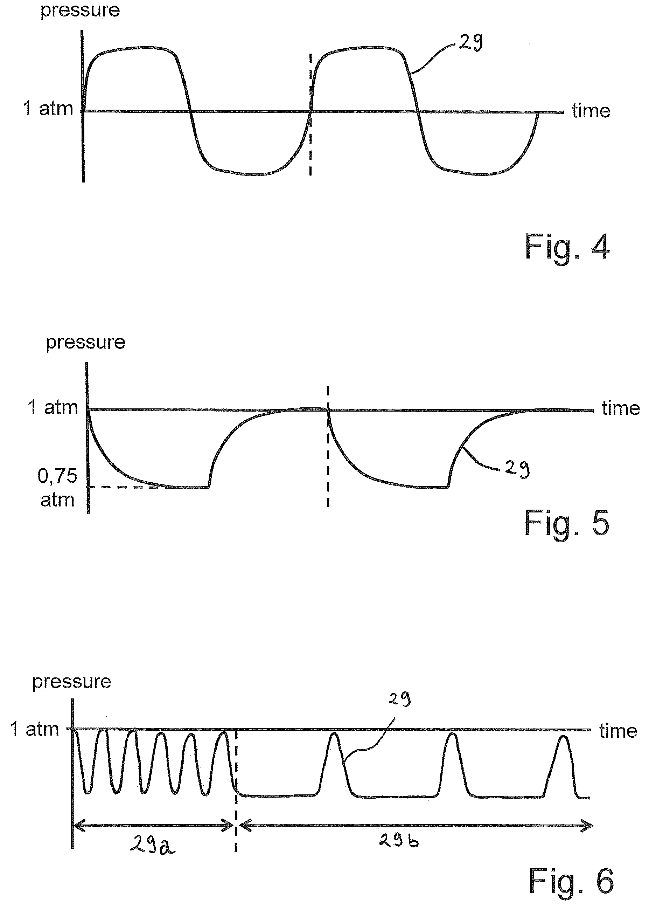

Fig. 4, Fig. 5 and Fig. 6 depict different reciprocating pressure patterns 29. In the pattern shown in Fig. 4, the pressure inside the storage chamber 3 reciprocates across the ambient pressure of 1 atmosphere, i.e. the pressure outside the container 5. That is, the pressure inside the storage chamber 3 fluctuates between a negative and positive pressure, in relation to the ambient pressure outside the container. Thus, forces resulting from the pressure difference will act in both directions on the container walls 7. The container 5 consequently needs to be built to withstand such varying forces. By reciprocating the pressure across the 1 atmosphere value (or more precisely, across the pressure value outside the container 5), one is able to obtain a relatively large pressure difference without large forces on the container walls 7 (as compared to the reciprocating pressure patterns that remains on one side of the 1 atmosphere value).

An advantage of using positive pressures, i.e. pressures that are higher than the pressure outside the container 5 (ambient pressure), is that it will enhance convection. That is, the temperature difference between the packing space 11 (Fig. 1) and the storage chamber 3 (outside the packing space), will move faster towards an equalized condition, when the pressure is large.

Another advantage of using positive pressures is that one will introduce more gas / air (more mass) into the packings 1, thereby better affecting the conditions / climate of the packing space 11.

The reciprocating pressure pattern 29 shown in Fig. 5 reciprocates between the ambient pressure value of 1 atmosphere (i.e. the ambient pressure outside the container) and a lower pressure of 0,75 atmosphere. (I.e. a negative pressure of 0,25 atmosphere in relation to the ambient pressure; about -0,25 bar). The declining portion of the reciprocating pressure pattern shown in Fig. 5 can typically result when the pressure device 9 comprises an air pump (gas pump), which evacuates the storage chamber 3. The increasing portion can typically result from letting air/gas into the storage chamber 3 through a valve.

The reciprocating pressure pattern 29 shown in Fig. 6 is divided into two phases. The pattern in a start-up phase 29a comprises pressure variations with a relatively high frequency, compared to the frequency of a storage phase 29b. The pressure device 9 is operated according to the pattern of the start-up phase 29a when the packings 1 with goods 15 need to be rapidly affected by the storage chamber conditions. E.g. if the packings 1 and goods 15 are too warm, compared to cold air in the storage chamber 3, the pressure is reciprocated quickly and/or often (high frequency) to obtain a swift adjustment of the conditions in the packing space 11 of the packings 1. After a while, after reaching satisfactory levels in the packing space 11, one may reduce the frequency. For instance, one may want to reciprocate the pressure relatively seldom, in order to remove undesirable gases in the packing space 11 (e.g. ethylene) produced by the goods 15 (e.g. bananas). One can also imagine embodiments where the reduction of frequency takes place according to another pattern, such as an exponential curve.

The reciprocating pressure pattern 29 has sections with a constant pressure. Such constant pressure sections can also advantageously have a pressure equal to the ambient pressure outside the container. That would reduce possible leaks of air into or out of the container 5 from the outside, during such periods of constant pressure.

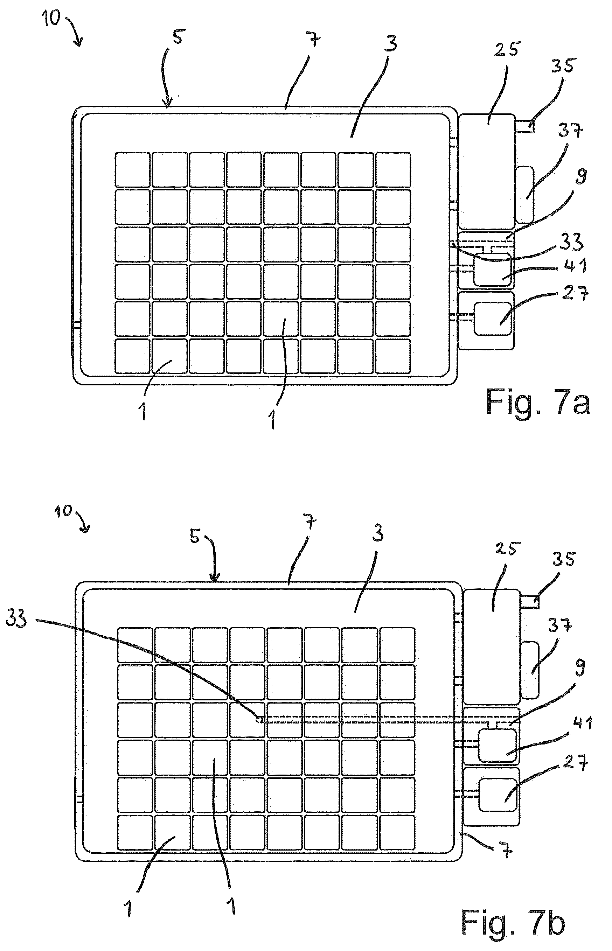

Fig. 7a shows another schematic, however more realistic, embodiment of a storage assembly 10. The storage assembly 10 has a substantial air tight insulated refrigerated container 5 providing a storage chamber 3. Inside the storage chamber 3, goods 15 in permeable packing 1 are shown to be stored and cooled. The container 5 is provided with a temperature device in the form of a refrigeration unit 25 adapted for introducing cooled air into the container 5. The refrigeration unit 25 may be mounted on a container wall 7. Alternatively, the refrigeration unit 25 may be provided as an integral part of the container, or provided in any other way know to the skilled person. The storage assembly 10 also comprises refrigeration unit control unit 37, controlling operation of the refrigeration unit 25, thereby controlling the temperature in the storage chamber 3.

In the embodiment shown in Fig. 7a, the pressure device is in the form of a vacuum device 9, adapted repeatedly evacuate the storage chamber 3. The storage chamber 3 is evacuated by removing air, whereby air pressure within the storage chamber 3 then is temporarily reduced below the ambient (atmospheric) pressure. When the pressure in the storage chamber 3 is reduced, air is also removed from the permeable packing 1, as explained above.

In one embodiment the vacuum device 9 is provided with a vacuum device inlet 33, through which air is removed from the storage chamber 3. The vacuum device 9 may also be an integral part of the refrigeration unit or other parts of the storage assembly 10, and thus not have a dedicated inlet for removing air from the storage chamber 3. The vacuum device inlet 33 may be arranged along a periphery of the container 5, such as in an upper region of the storage chamber 3 to effectively remove hot air rising to the top of the storage chamber 3.

Referring to Fig. 7b, in one embodiment the vacuum device inlet 33 may be arranged in a central area of the storage chamber 3 or in another position assumed to be substantially in a center of the packings 1 stored in the refrigerated container 5. Further, the position of the vacuum device inlet 33 may be variable, for example by providing a flexible hose in connection with the inlet. Hereby the vacuum device inlet 33 can be positioned according to the packings 1 stored to ensure an advantageous position of the inlet.

In the embodiments shown in Fig. 7a and Fig. 7b, the storage assembly 10 comprises a gas composition device 27, as discussed with reference to Fig. 3. The gas composition device 27 can in one embodiment store compressed air or a mixture of gasses, such as oxygen, nitrogen and/or carbon dioxide. The air or gas mixture may be stored in a pressure cylinder, which may be easily replaced. The gas composition device 27 is adapted to introduce the stored air or air mixture into the storage space following evacuation, thereby increasing pressure and delivering an advantageous gas composition.

Following evacuation of the storage chamber 3, the storage assembly 10 is adapted to increase the air pressure in the storage chamber 3 by introducing or re-introducing air. Air may be introduced by controlling the refrigeration unit 25 adapted for introducing cooled air into the container 5. Alternatively air may be introduced from the gas composition device 27, or via the pressure device 9. One may also arrange a controlled valve (not shown) to let ambient air into the storage chamber 3 (provided the pressure in the chamber is lower than the ambient pressure).

Repeatedly removing and re-introducing air from and to the storage space increases circulation of air inside permeable packing 1, such as boxes, storage containers or the like. As air circulation is increased, relatively hot air in the permeable packing may be replaced with colder air more effectively. Hereby the time required to cool goods to a desired temperature is reduced. A further effect of removing and re-introducing air is that humidity inside the storage space may be controlled. As the pressure device 9 can be controlled to remove warm air from the storage chamber 3, the pressure device 9 in itself may have a dehumidifying effect. The storage assembly 10 may also be provided with a dedicated humidity controlling device.

In one embodiment the refrigeration unit 25 comprises a refrigeration unit air intake 35 for drawing in ambient air surrounding the container 5 and the refrigeration unit 25 is adapted to introduce cooled ambient air into the storage chamber 3 to increase air pressure.

The pressure device 9 is dimensioned according to the size of the storage chamber 3. It can be adapted to reduce the air pressure inside the storage chamber 3 between 5% and 50%, preferable between 5% and 25%, during evacuation. The actual reduction of the air pressure inside the storage space may be adjusted according to how sensitive the goods stored are to variations in air pressure and levels of pressure below atmospheric pressure. One must of course also have in mind the forces resulting on the container walls 7 when increasing or decreasing the pressure in the storage chamber 3.

As shown with the diagram of Fig. 4, showing a reciprocating pressure pattern 29 which also exhibits values above the ambient pressure (outside the container 5), the pressure device 9 may also be operated so that the pressure in the storage chamber 3 has such positive pressures. It can be adapted to increase the air pressure inside the storage chamber 3 between 5% and 50%, preferable between 5% and 25%, during pressure increase, as compared to the ambient pressure (outside the container 5).

A repeated replacement of air/gas requires a continuous supply of air for being introduced into the storage chamber 3. In one embodiment, the storage assembly 10 comprises an air-recirculation arrangement 41 for collecting air evacuated from the storage chamber by the pressure device 9. The air removed from the storage chamber 3 may be partly or fully re-introduced into the storage space by the air-recirculation arrangement 41. Further, as removed air may comprise harmful gases such as ethylene or an undesirable composition of gasses, it may be desirable to treat the air before it is re-introduced. For this purpose, the air-recirculation arrangement 41 may be provided with a cleaning device configured to remove such undesirable gasses, before the air is re-introduced into the storage chamber 3. Additionally, the air-recirculation arrangement 41 may be provided with a humidity controlling device for decreasing or increasing the humidity of the air introduced into the into the storage chamber 3.

The duration of the step of increasing or decreasing the pressure in the storage chamber 3 be for instance from 20 to 40 seconds, or longer or shorter. The duration of the period wherein the pressure inside the storage chamber 3 is increased may also be from 20-40 seconds, or longer or shorter. If both the step of evacuating the storage space and the step of introducing air is from 20-40 seconds, the resulting frequency of what may be determined a cooling cycle is 40-80 seconds. It shall be noted, however, that these values are merely given as a possible example. The skilled person may employ a reciprocating pressure pattern with pressure values and a suitable pressure variation frequency which is suitable for the packings and goods in questions.

The pressure device 9 may in some embodiments be in form of a gas pump, which can pump air into or out from the storage chamber 3. The specifications of the air pump may affect the possible reciprocating pressure patterns 29 (cf. Fig. 4 to Fig. 6).

Fig. 8 and Fig. 9 schematically illustrate two other solutions for altering the pressure within the storage chamber 3. In the embodiment shown in Fig. 8, a piston 91 is able to reciprocate within a piston cylinder 93. The piston cylinder 93 communicates with the storage chamber 3, so that the pressure in the storage chamber 3 changes when the piston 91 is moved. A piston actuator 95 is connected to the piston 91 via a piston rod 97. Hence, by operating the piston actuator 95, such as with the pressure device control module 19 (cf. Fig. 3), the pressure in the storage chamber 3 can be repeatedly changed by reciprocating the piston 91. In this manner, the pressure is simply amended by changing the space available to the gas / air inside the storage chamber 3.

Fig. 9 shows an alternative embodiment, wherein a part of the container wall 7 has a flexible wall 71. The flexible wall 71 can be flexed into or out from the storage chamber 3, so that the pressure in the storage chamber 3 changes. For moving the flexible wall 71 back and forth, a wall actuator 73 connects to the flexible wall 71 via an attachment organ 75. As with the embodiments described above, the wall actuator 73 can be operated with the pressure device control unit 19. Also in this embodiment, the pressure change is obtained by amending the available space (i.e. the volume of the storage chamber 3).

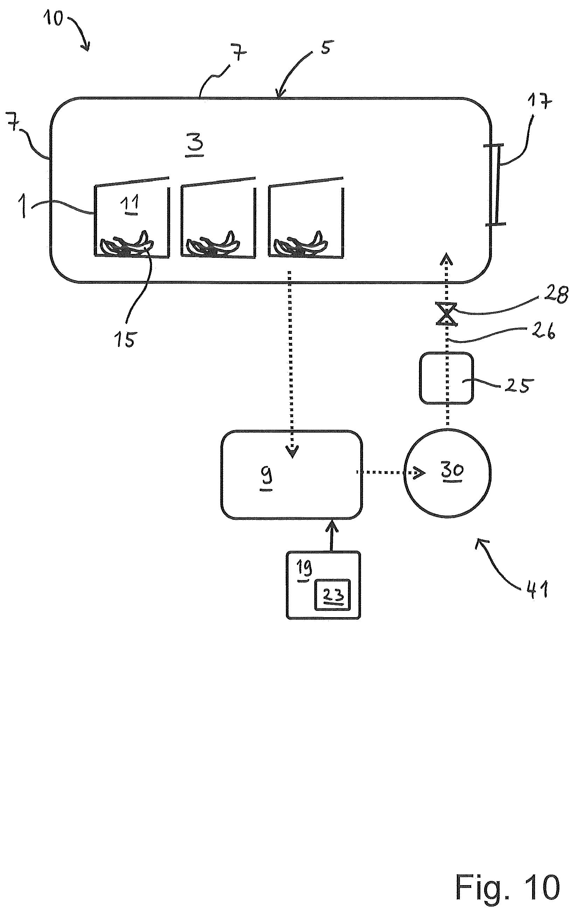

Fig. 10 depicts an embodiment of the invention with an air-recirculation arrangement 41, as was discussed above. In this embodiment, the pressure device 9 is configured to pump gas (air) out of the storage chamber 3, thereby reducing its pressure. In this illustration, air flow is indicated with broken lines. The temperature device 25, here in the form of a refrigeration unit, is connected in a re-entry flow path 26 that guides gas into the storage chamber 3. A controlled valve 28 governs the flow into the storage chamber 3. The air-recirculation arrangement 41 comprises an evacuated gas storage 30. The evacuated gas storage 30 is installed in the flow path between the pressure device 9 and the temperature device 25 (refrigeration unit). In this manner, already conditioned gas which is drawn from the storage chamber 3, can be re-inserted into the storage chamber 3 when the pressure shall rise. Thus, for instance a cooled air does not need much cooling by the refrigeration unit 25. Also, a storage chamber gas which has been conditioned with the gas composition device 27 (shown in Fig. 3, but could also be a part of the embodiment shown in Fig. 10), would be re-inserted into the storage chamber 3. Hence, a desired temperature or an advantageous gas mixture constituents are not lost when reducing the pressure.

In other embodiments, one could have the evacuated gas storage 30 connected only to the pressure device 9, i.e. with the pressure device 9 between the storage chamber 3 and the evacuated gas storage 30. The gas flowing into and out from the storage chamber 3 would then flow through the pressure device 9. In other words, the pressure device 9 would be installed in the re-entry flow path 26.

Also, in some embodiments, there may be only one flow path constituting both the flow path for evacuated gas ("evacuated gas flow path") and the re-entry flow path 26. In such embodiments, one may have the pressure device 9 between the temperature device 25 and the storage chamber 3. One may also instead have the temperature device 25 between the pressure device 9 and the storage chamber 3 (i.e. their succeeding order in the flow path).

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A storage assembly (10) comprising
- a storage chamber (3);
- a pressure device (9) in communication with the storage chamber (3);
- a pressure device control unit (19) controlling the pressure device (9);
**characterized in that** the pressure device control unit (19) is configured to control the pressure device (9) to sequentially amend the pressure within the storage chamber (3) according to a reciprocating pressure pattern (29).

2. A storage assembly (10) according to claim 1, **characterized in that** the pressure device control unit (19) comprises or connects to electronically stored or electronically readable pressure control instructions (23), according to which the pressure device control unit (19) is configured to operate the pressure device (9).

3. A storage assembly (10) according to claim 1 or claim 2, **characterized in that** said reciprocating pressure pattern (29) includes at least five succeeding steps of pressure reductions and pressure augmentations.

4. A storage assembly (10) according to one of the preceding claims, **characterized in that** the pressure device control unit (19) is configured to control the pressure device in such manner that the reciprocating pressure pattern (29) is within a predetermined frequency range which is from 0,0006 to 10 Hz.

5. A storage assembly (10) according to one of the preceding claims, **characterized in that** it is installed on a transport vehicle.

6. A storage assembly (10) according to one of the claims 2 to 5, **characterized in that** the pressure control instructions (23) includes a start-up phase (29a) and a storage phase (29b), wherein the start-up phase includes larger pressure variations and/or higher frequency than the storage phase does.

7. A storage assembly (10) according to one of the preceding claims, **characterized in that** it comprises a storage chamber condition manipulation means, including at least one of the following:
- a temperature device (25);
- a gas composition device (27).

8. A storage assembly (10) according to one of the preceding claims, **characterized in that** it comprises an evacuated gas storage (30), wherein the pressure device (9) is arranged in a flow path between the storage chamber (3) and the evacuated gas storage (30), and wherein it comprises a re-entry flow path (26) between the evacuated gas storage (30) and the storage chamber (3).

9. A method of adjusting the climate condition of a packing space (11) inside permeable packing (1) which is stored in a storage chamber (3), comprising the steps of
a) closing a closable door (17) of the storage chamber (3);
**characterized in that** the method further comprises the following steps:
b) while the closable door (17) remains closed, sequentially amending the pressure within the storage chamber (3) according to a reciprocating pressure pattern (29).

10. A method according to claim 9, **characterized in that** step b) comprises at least five succeeding steps of pressure reductions and pressure augmentations.

11. A method according to claim 9 or 10, **characterized in that** step b) is performed at least partly by means of a pressure device (9) communicating with the storage chamber (3), and that step b) includes controlling the pressure device (9) with a pressure device control unit (19) which operates according to a set of predetermined, stored pressure control instructions (23).

12. A method according to one of the claims 9 to 11, **characterized in that** the storage chamber (3) is carried by a wheeled vehicle, and that step b) is performed while the vehicle is moving.

## Amended claims

### Amended claims in accordance with Rule 137(2) EPC.

1. Use of a storage assembly (10) comprising
- a storage chamber (3) with permeable packings (1) with packing space (11) inside the packings;
- a pressure device (9) in communication with the storage chamber (3);
- a pressure device control unit (19) controlling the pressure device (9);
wherein the pressure device control unit (19) is configured to control the pressure device (9) to sequentially amend the pressure within the storage chamber (3) according to a reciprocating pressure pattern (29), to repeatedly make air or gas in the storage chamber (3) enter and leave the packing space (11), thereby replacing air or gas inside the packings (1) with air or gas from the storage chamber (3) outside the packings.

2. Use according to claim 1, **characterized in that** the pressure device control unit (19) comprises or connects to electronically stored or electronically readable pressure control instructions (23), according to which the pressure device control unit (19) is configured to operate the pressure device (9).

3. Use according to claim 1 or claim 2, wherein the storage chamber (3) is within a container (5), and wherein the pressure inside the storage chamber (3) fluctuates between a negative and positive pressure, in relation to the ambient pressure outside the container (5).

4. Use according to one of the preceding claims, **characterized in that** the pressure device control unit (19) is configured to control the pressure device in such manner that the reciprocating pressure pattern (29) is within a predetermined frequency range which is from 0,0006 to 10 Hz.

5. Use according to one of the preceding claims, **characterized in that** it is installed on a transport vehicle.

6. Use according to one of the claims 2 to 5, **characterized in that** the pressure control instructions (23) includes a start-up phase (29a) and a storage phase (29b), wherein the start-up phase includes larger pressure variations and/or higher frequency than the storage phase does.

7. Use according to one of the preceding claims, **characterized in that** it comprises a storage chamber condition manipulation means, including at least one of the following:
- a temperature device (25);
- a gas composition device (27).

8. Use according to one of the preceding claims, **characterized in that** it comprises an evacuated gas storage (30), wherein the pressure device (9) is arranged in a flow path between the storage chamber (3) and the evacuated gas storage (30), and wherein it comprises a re-entry flow path (26) between the evacuated gas storage (30) and the storage chamber (3).

9. A method of adjusting the climate condition of a packing space (11) inside permeable packing (1) which is stored in a storage chamber (3), comprising the steps of
a) closing a closable door (17) of the storage chamber (3);
**characterized in that** the method further comprises the following steps:
b) while the closable door (17) remains closed, sequentially amending the pressure within the storage chamber (3) according to a reciprocating pressure pattern (29);
to repeatedly make air or gas in the storage chamber (3) enter and leave the packing space (11), thereby replacing air or gas inside the packings (1) with air or gas from the storage chamber (3) outside the packings.

10. A method according to claim 9, **characterized in that** step b) comprises at least five succeeding steps of pressure reductions and pressure augmentations.

11. A method according to claim 9 or 10, **characterized in that** step b) is performed at least partly by means of a pressure device (9) communicating with the storage chamber (3), and that step b) includes controlling the pressure device (9) with a pressure device control unit (19) which operates according to a set of predetermined, stored pressure control instructions (23).

12. A method according to one of the claims 9 to 11, **characterized in that** the storage chamber (3) is carried by a wheeled vehicle, and that step b) is performed while the vehicle is moving.

13. A method according to claim 9, wherein the storage chamber (3) is within a container (5), and wherein the pressure inside the storage chamber 3 is fluctuated between a negative and positive pressure, in relation to the ambient pressure outside the container (5).

14. A method according to claim 11, wherein the pressure control instructions (23) includes a start-up phase (29a) and a storage phase (29b), wherein the start-up phase includes larger pressure variations and/or higher frequency than the storage phase does.
